(19) Europäisches Patentamt

European Patent Office

Office européen des brevets

(11) **EP 1 154 367 B1**

(12) **FASCICULE DE BREVET EUROPEEN**

(45) Date de publication et mention
de la délivrance du brevet:
**31.03.2004 Bulletin 2004/14**

(51) Int Cl.⁷: **G06K 7/00**

(21) Numéro de dépôt: **01410050.7**

(22) Date de dépôt: **11.05.2001**

(54) **Validation de la présence d'un transpondeur électromagnétique dans le champ d'un lecteur à démodulation de phase**

Vorhandenseinbestätigung eines elektromagnetischen Transponders in dem Feld eines Phasendemodulation-Lesers

Presence validation of an electomagnetic transponder in the field of a phase demodulation reader

(84) Etats contractants désignés:
**DE FR GB IT**

(30) Priorité: **12.05.2000 FR 0006064**

(43) Date de publication de la demande:
**14.11.2001 Bulletin 2001/46**

(73) Titulaire: **STMicroelectronics S.A.**
**92120 Montrouge (FR)**

(72) Inventeur: **Wuidart, Luc**
**83910 Pourrieres (FR)**

(74) Mandataire: **de Beaumont, Michel**
**Cabinet Michel de Beaumont**
**1, rue Champollion**
**38000 Grenoble (FR)**

(56) Documents cités:
**EP-A- 0 857 981          US-A- 6 028 503**

## Description

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe) dite borne de lecture et/ou d'écriture. Généralement, les transpondeurs extraient l'alimentation nécessaire aux circuits électroniques qu'ils comportent d'un champ haute fréquence rayonné par une antenne de la borne de lecture et d'écriture.

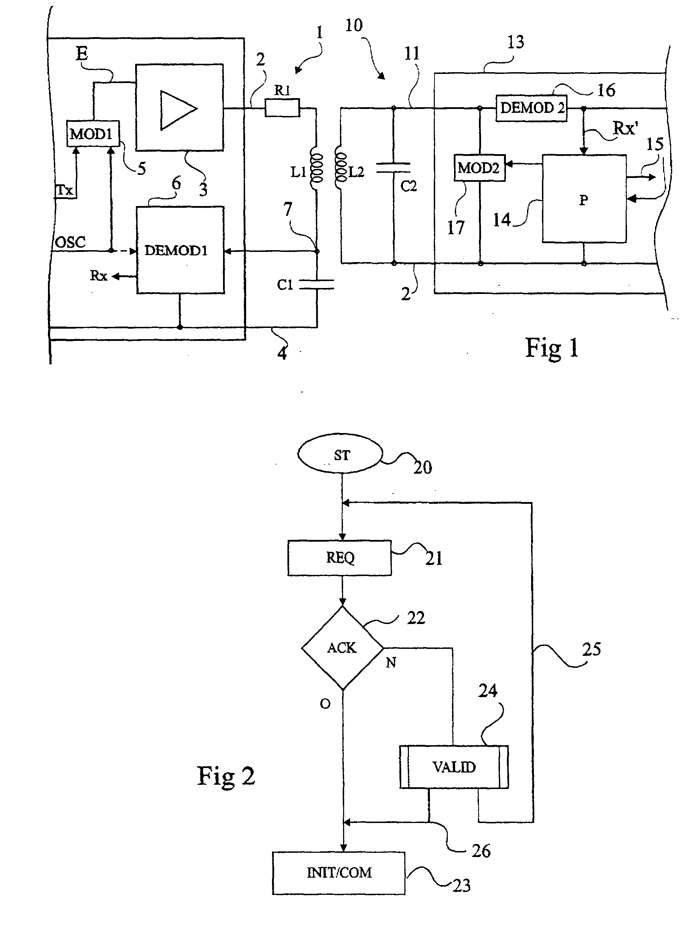

La figure 1 représente, de façon très schématique et simplifiée, un exemple classique de système d'échange de données du type auquel se rapporte la présente invention entre une borne 1 de lecture-écriture et un transpondeur 10.

Généralement, la borne 1 est essentiellement constituée d'un circuit oscillant série, formé d'une inductance L1 en série avec un condensateur C1 et une résistance R1, entre une borne 2 de sortie d'un amplificateur ou coupleur d'antenne 3 et une borne 4 à un potentiel de référence (généralement, la masse). L'amplificateur 3 reçoit un signal E de transmission haute fréquence, issu d'un modulateur 5 (MOD1) qui reçoit une fréquence de référence (signal OSC) par exemple, d'un oscillateur à quartz (non représenté). Le modulateur 5 reçoit, si besoin, un signal Tx de données à transmettre et, en l'absence de transmission de données depuis la borne, délivre la porteuse haute fréquence (par exemple, 13,56 MHz) propre à téléalimenter un transpondeur. En réception, la borne 1 utilise un démodulateur 6 (DEMOD1) qui sert à détecter une variation de charge engendrée par le transpondeur 10 sur le signal haute fréquence. Le démodulateur 6 prélève, par exemple, la tension aux bornes 7 et 4 du condensateur C1, et délivre un signal Rx de données reçues après démodulation.

D'autres circuits non représentés équipent généralement une borne 1. Parmi ces circuits, on retrouve, entre autres et de façon non limitative, un circuit de commande et d'exploitation des données reçues basé, le plus souvent, sur un microprocesseur de traitement des commandes et des données. Ces circuits communiquent généralement avec différents circuits d'entrée/sortie (clavier, écran, moyen d'échange avec un serveur, etc.) et/ou de traitement non représenté. Les circuits de la borne de lecture-écriture tirent l'énergie nécessaire à leur fonctionnement d'un circuit d'alimentation (non représenté) raccordé, par exemple, au réseau de distribution électrique ou à des batteries.

Un transpondeur 10, destiné à coopérer avec une borne 1, comporte essentiellement un circuit oscillant parallèle formé d'une inductance L2 en parallèle avec un condensateur C2 entre deux bornes 11 et 12 d'entrée d'un circuit 13 de commande et de traitement. Les bornes 11 et 12 sont, en pratique, reliées à l'entrée d'un moyen de redressement (non représenté) dont des sorties constituent des bornes d'alimentation continue des circuits internes au transpondeur. Ces circuits comprennent généralement, essentiellement, un microprocesseur 14 (P) susceptible de communiquer avec d'autres éléments (par exemple, une mémoire) par des liaisons 15. Le transpondeur 10 comprend en outre un démodulateur 16 (DEMOD2) des signaux reçus de la borne 1 qui délivre un signal Rx' au circuit 14, et un modulateur 17 (MOD2) pour transmettre, à la borne, des informations Tx' qu'il reçoit du circuit 14.

Les circuits oscillants de la borne et du transpondeur sont généralement accordés sur une même fréquence correspondant à la fréquence d'un signal d'excitation du circuit oscillant de la borne. Ce signal haute fréquence (par exemple 13,56 MHz) sert non seulement de porteuse de transmission mais également de porteuse de téléalimentation à destination du ou des transpondeurs se trouvant dans le champ de la borne. Quand un transpondeur 10 se trouve dans le champ d'une borne 1, une tension haute fréquence est engendrée aux bornes 11 et 12 de son circuit résonnant. Cette tension, après redressement et écrêtement éventuel, est destinée à fournir la tension d'alimentation des circuits électroniques 13 du transpondeur. Pour des raisons de clarté, les moyens de redressement, d'écrêtement et de fourniture d'alimentation n'ont pas été représentés en figure 1. On notera que, généralement, la démodulation (bloc 16) s'effectue en amont des moyens d'écrêtement pour préserver la modulation des données en amplitude sur la porteuse haute fréquence émise par la borne. Cette modulation d'amplitude s'effectue selon différentes techniques de codage afin de transmettre des données et/ou des commandes aux transpondeurs. En retour, la transmission de données Tx' du transpondeur vers une borne s'effectue généralement en modulant la charge constituée par le circuit résonnant L2, C2. C'est pourquoi le modulateur 17 a été représenté en parallèle sur ce circuit résonnant. La variation de charge s'effectue au rythme d'une sous porteuse, dite de rétromodulation, de fréquence (par exemple 847,5 kHz) inférieure à celle de la porteuse.

La variation de charge provenant d'un transpondeur peut alors être détectée par la borne sous la forme d'une variation d'amplitude ou d'une variation de phase au moyen, par exemple, d'une mesure de la tension aux bornes du condensateur C1 ou du courant dans le circuit oscillant à l'aide du démodulateur 6.

La présente invention s'applique plus particulièrement aux systèmes dont la borne de lecture et/ou d'écriture utilise une démodulation de phase pour détecter la variation de charge d'un transpondeur dans son champ et démoduler ainsi les données transmises.

Un problème qui se pose dans les systèmes à transpondeur électromagnétique classiques est qu'il arrive qu'un transpondeur téléalimenté par une borne et émettant des données à destination de celle-ci ne soit pas détecté par la borne, c'est-à-dire que le démodulateur de la borne ne parvienne pas à détecter la présence d'une modulation de données. Ce phénomène est généralement désigné par l'expression "trou de démodulation". Pour un système donné, il s'agit d'une position relative d'une borne et d'un transpondeur à laquelle le démodulateur de la borne est "aveugle".

On notera que cette notion de trou de démodulation est différente de ce que l'on désigne par "trou de téléalimentation" où c'est le transpondeur qui ne parvient pas à être alimenté par le signal haute fréquence alors même qu'il est dans le champ électromagnétique de la borne. En effet, il existe une position relative entre un transpondeur et une borne à laquelle le couplage magnétique entre les circuits oscillants est tel que le transpondeur n'est pas alimenté, c'est-à-dire que la tension récupérée aux bornes 11 et 12 de son circuit oscillant est trop faible pour qu'il fonctionne. Dans un trou de démodulation, le transpondeur est correctement alimenté. Il détecte généralement correctement les données transmises par la borne en modulation d'amplitude. Il émet correctement des données à la borne en rétromodulation, par variation de la charge de son circuit oscillant. Toutefois, le démodulateur de la borne ne détecte pas cette rétromodulation.

Ce problème de trou de démodulation fait qu'une borne peut ne pas détecter un transpondeur présent dans son champ dans la mesure où cette détection fait classiquement appel au résultat du démodulateur de données côté borne. En particulier, lorsqu'elle est dans un état de veille en attente d'une transmission, une borne émet périodiquement des requêtes d'interrogation en modulant l'amplitude de la porteuse de téléalimentation. La borne surveille alors la sortie de son démodulateur qui lui indiquera la présence d'un transpondeur. En effet, quand un transpondeur se trouve "réveillé" par son entrée dans le champ d'une borne, celui-ci démodule le message d'interrogation transmis périodiquement par cette borne et y répond pour se faire identifier.

Un inconvénient supplémentaire est que, comme le transpondeur a de son côté reçu des données de la borne, celui-ci se croît identifié par la borne ce qui n'est pas vrai. Les seules techniques actuelles pour isoler ce phénomène sont de multiplier les échanges d'informations pour valider la transmission, ce qui est coûteux en terme de durée de transmission.

Différents systèmes à transpondeur du type auquel s'applique la présente invention sont décrits, par exemple, dans les brevets américains n° 4 963 887 et 5 550 536, ainsi que dans les demandes de brevets européens n° 0 722 094 et 0 857 981.

Dans une borne de lecture/écriture pourvue d'un démodulateur de phase, la tension de sortie du démodulateur s'annule, c'est-à-dire que l'on est en présence d'un trou de démodulation dans une configuration de fréquence qui, pour un coefficient de couplage donné entre les circuits oscillants de la borne et du transpondeur concerné, correspond à l'accord parfait de la borne et du transpondeur sur la fréquence de la porteuse de téléalimentation. Côté transpondeur, cette fréquence est alors la fréquence de résonance propre du circuit oscillant L2-C2 du transpondeur.

On a déjà proposé de désaccorder à demeure les circuits oscillants de la borne et du transpondeur de façon à ce que ces deux circuits ne soient pas tous deux accordés sur la fréquence de la porteuse de téléalimentation. Toutefois, un inconvénient qui en découle est que cela nuit à la téléalimentation du transpondeur, et donc à la portée du système. En effet, l'énergie récupérée par le transpondeur est maximale lorsque les deux circuits oscillants de la borne et du transpondeur sont tous deux accordés sur la fréquence de la porteuse.

De plus, les tolérances de fabrication des condensateurs utilisés pour les circuits oscillants, en particulier pour le condensateur C2 du transpondeur qui est généralement intégré, sont généralement de l'ordre de 10 %. L'importance de ces tolérances conduit à devoir se décaler sensiblement de la fréquence de la porteuse si l'on veut diminuer les risques de trous de démodulation.

Ainsi, un inconvénient notable des systèmes classiques à démodulation de phase, est que l'on est contraint d'effectuer un compromis entre la téléalimentation et la capacité de démodulation de phase par la borne. De plus, ce compromis est délicat à réaliser, la position du trou dans la réponse du démodulateur de phase variant en fonction de la mutuelle inductance entre les circuits oscillants. Or, cette mutuelle inductance dépend de la distance qui sépare les antennes L1 et L2 de la borne et du transpondeur, donc de la position relative du transpondeur par rapport à la borne lors de la transmission.

Les problèmes combinés d'existence de trous de démodulation, et de la variation de la position de ces trous de démodulation par rapport à la distance entre les inductances, associés aux tolérances de fabrication des composants, rendent les systèmes classiques peu fiables.

La présente invention vise à pallier les inconvénients des systèmes classiques relatifs à la présence de trous de démodulation dans la réponse du démodulateur d'une borne de lecture-écriture.

Plus particulièrement, la présente invention vise à proposer un nouveau procédé de commande qui rende une borne de lecture-écriture insensible aux trous de démodulation des données qu'elle reçoit d'un transpondeur entré dans son champ.

La présente invention vise également à proposer une nouvelle borne insensible aux trous de démodulation des données qu'elle reçoit d'un transpondeur entré dans son champ.

La présente invention vise également à proposer une solution n'entraînant aucune modification des transpondeurs et qui soit par conséquent compatible avec les transpondeurs existants.

La présente invention vise en outre à proposer une solution qui soit particulièrement adaptée à une borne équipée d'un démodulateur de phase. Une solution à ces problèmes est décrite dans le document EP-A-1 134 690 qui est un document au sens de l'Article 54(3) EPC.

Pour atteindre ces objets, la présente invention prévoit une borne de génération d'un champ électromagnétique selon la revendication 1 et un procédé selon la revendication 5.

Selon un mode de réalisation de la présente invention, la borne comporte en outre des moyens de désactivation desdits moyens de régulation de phase, et des moyens de forçage de la valeur d'un élément réglable du circuit oscillant.

Selon un mode de réalisation de la présente invention, ledit élément réglable est constitué d'un élément capacitif variable du circuit oscillant de la borne.

Selon un mode de réalisation de la présente invention, l'élément réglable est commun aux moyens de régulation de phase et aux moyens de forçage.

La présente invention prévoit également un procédé de commande d'une borne, consistant à exploiter les résultats des moyens de comparaison pour détecter la présence d'un transpondeur dans le champ de la borne.

Selon un mode de réalisation de la présente invention, lesdites valeurs prédéterminées correspondent à des valeurs mesurées et mémorisées lors d'un fonctionnement à vide de la borne, alors qu'aucun transpondeur n'est présent dans son champ.

Selon un mode de réalisation de la présente invention, le procédé consiste à, en l'absence de signal utile d'amplitude suffisante pour permettre au démodulateur de détecter des données et si un transpondeur a été détecté par la comparaison des valeurs courantes et prédéterminées, désactiver les moyens de régulation de phase et forcer la valeur de l'élément réglable du circuit oscillant sur une valeur propre à modifier l'impédance du circuit oscillant de la borne en préservant la téléalimentation du transpondeur.

Selon un mode de réalisation de la présente invention, la valeur de forçage est choisie pour éviter que lesdites grandeurs retrouvent lesdites valeurs prédéterminées.

Selon un mode de réalisation de la présente invention, le procédé consiste, pour choisir la valeur de forçage, à :

calculer la partie imaginaire courante de l'impédance du circuit oscillant de la borne ; et
comparer le module courant de cette partie imaginaire à une valeur limite prédéterminée pour :

a) si le module courant est supérieur à la valeur limite, choisir une valeur de forçage conférant, à l'impédance du circuit oscillant, une partie imaginaire de même module mais de signe opposé par rapport à la partie imaginaire courante , ou
b) si le module courant est inférieur ou égal à la valeur limite, choisir une valeur de forçage différente selon que la partie imaginaire courante est positive ou négative.

Selon un mode de réalisation de la présente invention, le procédé consiste, dans le cas b, à choisir une valeur de forçage fonction de la valeur à vide de l'élément de réglage avec un coefficient de proportionnalité qui :

a') si la partie imaginaire courante est négative, est supérieur à l'unité ; et
b') si la partie imaginaire courante est positive, est inférieur à l'unité.

Selon un mode de réalisation de la présente invention, le procédé consiste à choisir une valeur de forçage $C1_f$ qui :

a') si la partie imaginaire courante est négative, respecte la relation suivante :

$$C1_f = \frac{C1_{vide}}{1 - k_{max}^2} \; ;$$

et
b') si la partie imaginaire courante est positive, respecte la relation suivante :

$$C1_f = \frac{C1_{vide}}{1 + k_{max}^2} \; ,$$

où $C1_{vide}$ représente la capacité à vide de l'élément de réglage et où $k_{max}$ représente le coefficient de couplage maximal entre le transpondeur et la borne.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 représente, de façon très schématique et simplifiée, un exemple classique de système à transpondeur électromagnétique ;
la figure 2 représente, sous forme d'organigramme simplifié, un mode de mise en oeuvre du procédé de validation de la présence d'un transpondeur selon la présente invention ;
la figure 3 représente, partiellement et de façon schématique, un mode de réalisation d'une borne de lecture-écriture à démodulation de phase selon la présente invention ;
la figure 4 illustre, sous forme d'organigramme, un mode de mise en oeuvre du procédé de validation de l'invention ; et
la figure 5 représente des exemples d'allure de l'amplitude de la variation de phase disponible en entrée du démodulateur de phase d'une borne de lecture-écriture en fonction de la capacité du circuit oscillant d'un transpondeur entré dans le champ de cette borne.

Les mêmes éléments ont été désignés par les mêmes références aux différentes figures. Pour des raisons de clarté, seuls les éléments d'une borne et d'un transpondeur et seules les étapes de procédé d'échange d'informations qui sont nécessaires à la compréhension de l'invention ont été illustrés aux figures et seront décrits par la suite. En particulier, les détails constitutifs des modulateurs et démodulateurs n'ont pas été détaillés et sont à la portée de l'homme du métier à partir des indications fonctionnelles données ci-après. En outre, l'invention sera exposée en relation avec des transpondeurs utilisant une rétromodulation dite "résistive" pour faire varier la charge qu'ils constituent sur le circuit oscillant de la borne (les capacités des circuits oscillants des transpondeurs étant fixes), mais on notera que l'invention s'applique plus généralement à tout type de rétromodulation, par exemple à une rétromodulation dite "capacitive".

Une caractéristique de la présente invention est de prévoir une détermination directe de la présence d'un transpondeur dans le champ d'une borne de lecture-écriture, c'est-à-dire sans qu'il soit nécessaire d'interpréter des signaux démodulés de transmission de données émanant de ce transpondeur. Plus précisément, la présente invention prévoit, en cas d'absence d'un signal démodulé utilisable par la borne, de valider l'absence d'un transpondeur dans le champ de celle-ci par une autre détermination indépendante de l'existence d'une transmission de données.

Une autre caractéristique de la présente invention est de prévoir, en cas d'incohérence entre le résultat du démodulateur et de la détermination directe, une action correctrice permettant au démodulateur de la borne d'interpréter correctement les données reçues. Cette action correctrice s'effectue préférentiellement sur le circuit oscillant de la borne et, de préférence, sur l'élément capacitif de ce circuit.

La détermination de la présence ou de l'absence d'un transpondeur dans le champ de la borne s'effectue, selon l'invention, par une mesure du courant dans le circuit oscillant de la borne et de la tension aux bornes de son élément capacitif (ou de grandeurs directement liées au courant et à la tension), et en comparant les valeurs courantes obtenues à des valeurs mémorisées précédemment. Ces dernières correspondent, de préférence, à des valeurs mesurées dans une phase d'apprentissage où le lecteur est dans une configuration particulière.

La figure 2 est un organigramme simplifié d'un mode de mise en oeuvre d'une séquence de validation de la présence d'un transpondeur dans le champ de la borne, appliqué à l'état de veille d'une borne de lecture-écriture.

Dès qu'elle est mise sous tension et en fonctionnement, une borne de lecture-écriture de transpondeur débute (bloc 20, ST), après une phase d'allumage, d'initialisation et de test, une procédure de veille pendant laquelle elle attend l'établissement d'une communication avec un transpondeur. Cette procédure consiste, essentiellement, à envoyer (bloc 21) périodiquement une séquence d'interrogation (REQ) à destination du ou des transpondeurs éventuels présents dans le champ de la borne. Après chaque envoi de requête d'interrogation 21, le lecteur surveille (bloc 22) la réception, par son démodulateur, d'un message de réponse (ACK) provenant d'un transpondeur entré dans son champ.

Dans un procédé classique (non représenté), en l'absence de réponse, le lecteur se met en boucle sur l'envoi d'une interrogation 21. Lorsqu'il reçoit une réponse ACK, il passe dans un mode de vérification que le transpondeur est bien un transpondeur qui lui est destiné, ainsi que dans un mode éventuel d'anti-collision (bloc 23, INIT/COM) pour individualiser plusieurs transpondeurs éventuellement présents dans le champ. En effet, en réponse à une requête d'interrogation par une borne, si plusieurs transpondeurs sont présents dans le champ de celle-ci, ils peuvent répondre en même temps ou avec un décalage temporel suffisamment faible pour rendre le résultat de la démodulation par le lecteur inexploitable. Celui-ci doit alors, soit sélectionner un transpondeur avec lequel il veut communiquer, soit attribuer différents canaux aux différents transpondeurs.

Une communication ne débute que quand le processus d'initialisation et d'anti-collision illustré à la figure 2 par le bloc 23 est terminé. Dès qu'un transpondeur donné a été correctement identifié, celui-ci est placé dans un état où il ne répond plus aux requêtes d'interrogation pour ne pas polluer la détection des autres transpondeurs éventuels.

Un processus d'initialisation et d'anti-collision du type décrit brièvement ci-dessus est parfaitement connu. On trouve, par exemple, des illustrations de procédés classiques dans les demandes de brevet français n° 2 760 280 et 2 773 627 considérées comme connues.

Que ce soit pendant les procédures de veille ou pendant une communication, la borne exploite les résultats fournis par son démodulateur.

Selon la présente invention, à chaque fois que le lecteur s'attend à obtenir un résultat de son démodulateur et que ce résultat est négatif (bloc 22), on met en oeuvre une procédure de validation propre à l'invention (bloc 24, VALID).

Si la mise en oeuvre du procédé de l'invention valide l'absence de transpondeur dans le champ de la borne, on reprend l'envoi classique d'une requête d'interrogation (liaison 25). Par contre, si la vérification effectuée par l'invention infirme le résultat de démodulateur et indique qu'un transpondeur doit être présent dans le champ de la borne, on effectue une action correctrice sur son circuit oscillant avant de poursuivre l'initialisation de la communication (liaison 26).

Pour s'affranchir du problème de tolérance et de dérive des composants du circuit oscillant des transpondeurs, les valeurs de ces éléments pouvant de plus varier d'un transpondeur à l'autre, on prévoit selon la présente invention de réguler la phase du circuit oscillant de la borne par rapport à une valeur de référence. Selon l'invention, cette régulation de phase est effectuée au moyen d'une boucle dont le temps de réponse est choisi pour que la boucle soit suffisamment lente afin de ne pas gêner la rétromodulation éventuelle provenant d'un transpondeur, et soit suffisamment rapide devant la vitesse de passage d'un transpondeur dans le champ de la borne. On peut parler de régulation statique par rapport aux fréquences de modulation (par exemple, la fréquence de la porteuse de téléalimentation de 13,56 MHz, et la fréquence de rétromodulation de 847,5 kHz utilisée dans la transmission de données du transpondeur vers la borne).

Un tel asservissement de phase du circuit oscillant de la borne peut être mis en oeuvre en utilisant des moyens connus tels que ceux décrits, par exemple, dans la demande de brevet Européen n° 0 857 981 déjà citée. L'adaptation du système prévu par ce document pour le mise en oeuvre de l'invention, ou d'un autre système d'asservissement de phase connu, est à la portée de l'homme du métier à partir des indications fonctionnelles données dans la présente description.

Grâce au recours à une boucle de régulation de phase, on peut désormais exploiter des mesures de courant et de tension dans le circuit oscillant de la borne pour en déduire, selon l'invention, une information relative à la présence d'un ou plusieurs transpondeurs dans le champ.

Le courant, désigné par I, dans le circuit oscillant série de la borne (par exemple, mesuré par un transformateur d'intensité) est lié à la tension (Vg) dite de générateur, excitant le circuit oscillant, et à l'impédance apparente $Z1_{app}$ du circuit oscillant par la relation suivante :

$$Z1_{app} = \frac{Vg}{I} \qquad (1)$$

Or, en considérant que la résistance et l'inductance série du circuit oscillant de la borne ont des valeurs fixes et immuables, au moins pour une borne donnée, la tension d'excitation du circuit oscillant est proportionnelle par un coefficient constant à la tension (VC1) aux bornes de l'élément capacitif de la borne. Par conséquent, évaluer l'impédance apparente du circuit oscillant de la borne revient à évaluer le rapport entre la tension aux bornes de l'élément capacitif et le courant dans le circuit oscillant.

L'évaluation de la présence d'un transpondeur effectuée par l'invention utilise exclusivement les informations de courant dans le circuit oscillant de la borne et de tension aux bornes de celui-ci, plus précisément aux bornes de son élément capacitif (ou des informations directement liées, par des coefficients invariables et déterminés, à ces grandeurs).

Selon l'invention, on utilise les valeurs, dites "à vide", du courant et de la tension quand aucun transpondeur n'est présent dans le champ de la borne. Ces grandeurs électriques sont aisément mesurables côté borne de lecture-écriture, par exemple, dans une phase d'apprentissage, par exemple, qui suit l'implantation de la borne dans son site d'application.

Par la suite, en évaluant le rapport courant (ou une information liée) entre la tension aux bornes de l'élément capacitif et le courant dans le circuit oscillant, on peut en déduire la présence d'un transpondeur dans le champ.

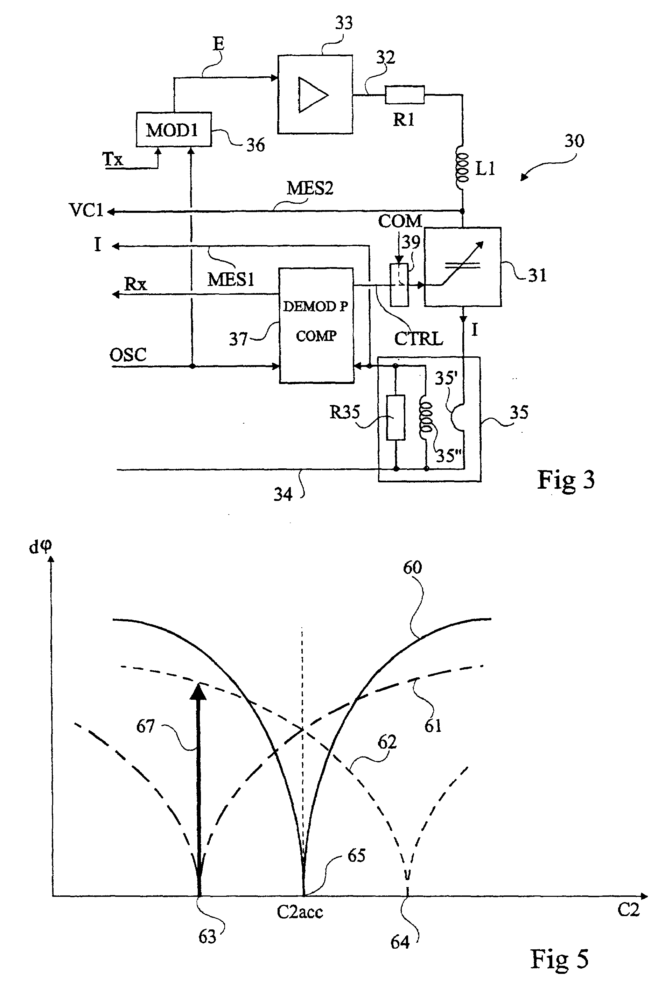

La figure 3 représente, de façon schématique et simplifiée, un mode de réalisation d'une borne de lecture-écriture selon l'invention, équipée d'une boucle de régulation de phase du circuit oscillant et d'un démodulateur de phase.

De façon classique, la borne 30 comporte un circuit oscillant formé d'une inductance ou antenne L1, en série avec un élément capacitif 31 et un élément résistif R1, entre une borne 32 de sortie d'un amplificateur ou coupleur d'antenne 33 et une borne 34 à un potentiel de référence, (généralement, la masse). Un élément de mesure 35 du courant dans le circuit oscillant est intercalé, par exemple, entre l'élément capacitif 31 et la masse 34. Cet élément de mesure 35 sert, notamment, à délivrer l'information du courant (I) à destination des moyens d'exploitation des données côté borne, constitués, par exemple, d'un microprocesseur (non représenté). L'amplificateur 33 reçoit un signal E de transmission haute fréquence, issu d'un modulateur 36 (MOD1) qui reçoit une fréquence de référence (signal OSC), par exemple, d'un oscillateur à quartz (non représenté). Le modulateur 36 reçoit, si besoin, un signal Tx de données à transmettre et, en l'absence de transmission de données depuis la borne, délivre la porteuse haute fréquence (par exemple 13,56 MHz) propre à téléalimenter un transpondeur. L'élément capacitif 31 est un élément à capacité variable et commandable par un signal CTRL.

On réalise une régulation de phase du courant dans l'antenne L1 par rapport à un signal de référence. Cette régulation est une régulation du signal haute fréquence, c'est-à-dire du signal de la porteuse correspondant au signal E en l'absence de données à transmettre. Cette régulation est effectuée en faisant varier la capacité du circuit oscillant de la borne 30 de façon à maintenir le courant dans l'antenne en relation de phase constante avec le signal de référence qui correspond, par exemple, au signal OSC fourni par l'oscillateur du modulateur. Toutefois, la régulation est suffisamment lente pour ne prendre en compte que les variations de phase statiques devant la sous porteuse de rétromodulation. Le signal CTRL est issu d'un circuit 37 (COMP) dont le rôle est de détecter l'écart de phase par rapport au signal de référence et de modifier, en conséquence, la capacité de l'élément 31. Dans le présent exemple, la mesure de phase est effectuée à partir d'une mesure du courant I dans le circuit au moyen du transformateur d'intensité 35 monté en série avec l'élément 31. Ce transformateur est généralement constitué d'un enroulement primaire 35' entre l'élément 31 et la masse, et d'un enroulement secondaire 35" dont une première borne est reliée directement à la masse 34 et dont une deuxième borne délivre un signal MES1 fonction du courant I, envoyé au comparateur 37 qui asservit en conséquence l'élément capacitif 31 au moyen du signal CTRL.

Selon l'invention, le signal MES1 est également envoyé, comme cela a été indiqué précédemment, au microprocesseur ou analogue, pour mettre en oeuvre le procédé de validation de l'invention. Un deuxième signal de mesure MES2, délivrant une information relative à la tension VC1 aux bornes de l'élément capacitif 31, est également envoyé au microprocesseur. Ce signal est prélevé, par exemple, entre l'inductance L1 et l'élément 31.

La borne 30 comporte, en outre, un démodulateur de phase (DEMODP) propre à délivrer un signal Rx restituant une rétromodulation éventuelle de données reçues d'un transpondeur au reste des circuits électroniques de la borne non représentés. Selon un mode de réalisation préféré illustré par la figure 3, le comparateur 37 de la boucle de régulation de phase utilise le même détecteur de phase que celui qui sert à démoduler le signal provenant du transpondeur. Par conséquent, le signal Rx de données démodulées à partir d'une évaluation du déphasage, est délivré par le comparateur 37. On se souviendra cependant que l'interprétation du résultat de détection est différente. Le démodulateur tient compte des variations dynamiques (à la fréquence de la sous porteuse) tandis que le régulateur de phase tient compte des variations statiques. En variante, on pourra bien sûr utiliser deux détecteurs de phase distincts.

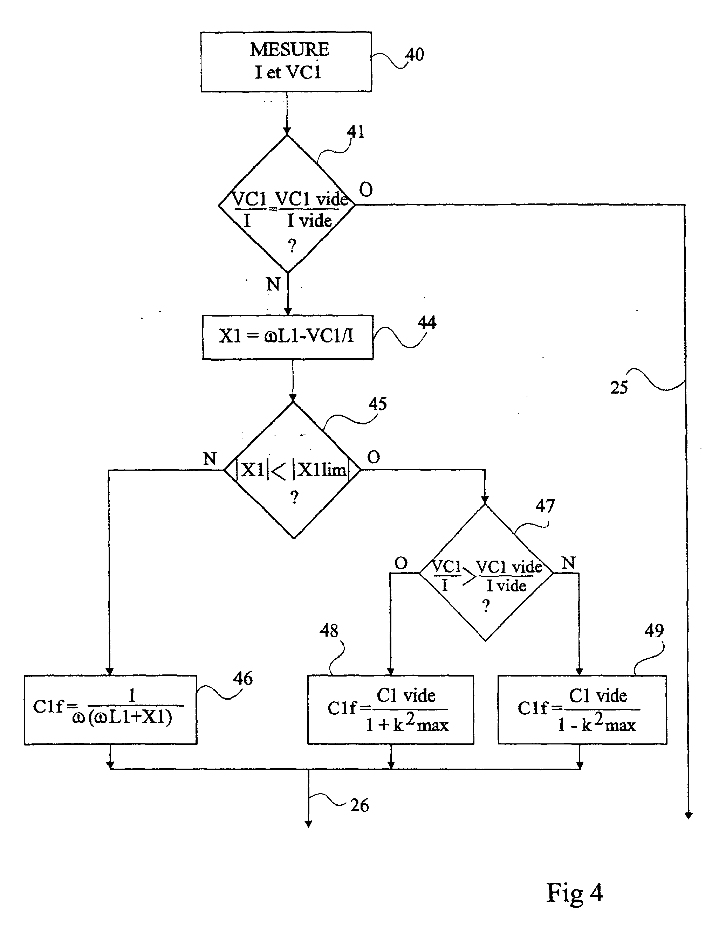

La figure 4 est un organigramme d'un mode de mise en oeuvre du procédé de validation (bloc 24, figure 2) de l'invention.

Comme cela a déjà été indiqué précédemment, on commence par mesurer (bloc 40) le courant I et la tension VC1 dans le circuit oscillant. Puis, on compare (bloc 41) le rapport de la tension VC1 sur le courant I aux mêmes grandeurs mais mesurées à vide (VC1$_{vide}$ et I$_{vide}$) dans une phase d'apprentissage. Si les deux rapports sont identiques, cela signifie qu'aucun transpondeur n'est présent dans le champ de la borne et le procédé de validation en délivre l'information (liaison 25). Par contre, si les deux rapports sont différents, cela signifie que le démodulateur se trouve dans un trou de démodulation alors même qu'un transpondeur est présent dans le champ de la borne.

En effet, la partie imaginaire X1$_{app}$ de l'impédance apparente Z1$_{app}$ du circuit oscillant de la borne peut s'exprimer sous la forme :

$$X1_{app} = X1 - a^2 \cdot X2 , \qquad (2)$$

où X1 représente la partie imaginaire de l'impédance du circuit oscillant de la borne, à savoir :

$$X1 = L1 \cdot \omega - \frac{1}{C1 \cdot \omega} , \qquad (3)$$

où X2 représente la partie imaginaire de l'impédance du circuit oscillant du transpondeur, à savoir :

$$X2 = L2 \cdot \omega - \frac{1}{C2 \cdot \omega} , \qquad (4)$$

et avec :

$$a^2 = \frac{k^2 \cdot \omega^2 \cdot L1 \cdot L2}{X2^2 + R2^2} , \qquad (5)$$

où $\omega$ représente la pulsation, et où R2 représente la charge constituée par les circuits oscillants du transpondeur sur son propre circuit oscillant, modélisée par une résistance en parallèle avec l'inductance L2 et le condensateur C2. En d'autres termes, la résistance R2 représente la résistance équivalente de tous les circuits (microprocesseurs, moyens de rétromodulation, etc.) du transpondeur, ramenée en parallèle sur le condensateur C2 et l'inductance L2.

Grâce à la régulation de phase, la partie imaginaire X1$_{app}$ est nulle. Par conséquent :

$$X1 = a^2 \cdot X2. \qquad (6)$$

A partir de ces relations, on peut exprimer la différence entre les valeurs courante et à vide de la façon suivante :

$$X1 - X1_{vide} = a^2 \cdot X2 - a_{vide}^2 \cdot X2 . \qquad (7)$$

Or, le coefficient a$_{vide}$ est nul dans la mesure où le couplage à vide est également nul. De plus, la tension VC1 aux bornes de l'élément 31 (en négligeant l'influence du transformateur d'intensité 35) peut s'écrire I/$\omega$C1. Il en découle que la formule (7) ci-dessus peut s'écrire :

$$a^2 X2 = \frac{VC1_{vide}}{I_{vide}} - \frac{VC1}{I} . \qquad (8)$$

Si l'expression 8 ci-dessus est différente de zéro, cela signifie non seulement qu'un transpondeur est présent dans le champ de la borne mais également que, pour ce transpondeur, la variable X2 est différente de 0, c'est-à-dire que son circuit oscillant est désaccordé même légèrement. Cela est parfaitement cohérent avec le fait que le transpondeur émet des données à destination de la borne, c'est-à-dire qu'il modifie la charge qu'il constitue sur le circuit oscillant de la borne.

En d'autres termes, on peut considérer que la formule ci-dessus ne s'annule que dans deux cas. Le premier cas correspond au cas où aucun transpondeur n'est présent dans le champ de la borne. Le second cas est celui où le condensateur C2 du circuit oscillant du transpondeur est parfaitement accordé sur la porteuse de téléalimentation. Dans ce cas, X2 = 0.

En pratique, les dispersions technologiques et dérives en fonctionnement du transpondeur conduisent à des variations de plus ou moins 10 % de la capacité du condensateur C2 par rapport à une valeur d'accord $C2_{acc}$. De plus, on ne peut généralement pas intervenir sur le transpondeur pour corriger ces variations. C'est notamment pourquoi la boucle de régulation de phase permet d'optimiser la téléalimentation du transpondeur en compensant ces éventuelles dérives par une modification de l'accord côté borne de lecture-écriture.

La correction effectuée selon l'invention pour sortir d'un trou de démodulation consiste, de préférence, à forcer la valeur de la capacité C1 de l'élément 31 sur une valeur prédéterminée lors de la phase d'apprentissage. Ce choix est lié au fait que la régulation de phase s'effectue de façon préférée par une modification de la capacité du circuit oscillant. Par conséquent, on prévoit un élément capacitif variable dont on peut ajuster la valeur, soit pour asservir la phase de façon statique dans le circuit oscillant, soit pour forcer la valeur de l'élément capacitif afin de décaler l'accord du circuit quand on est en présence d'un trou de démodulation.

Le forçage de la valeur de la capacité C1 s'effectue par exemple, au moyen d'un signal COM délivré par le processeur de traitement (non représenté) à un circuit 39 de sélection de la consigne de commande de l'élément 31 entre le signal CTRL délivré par circuit 37 et la valeur de forçage. La réalisation pratique de cette fonction est à la portée de l'homme du métier. On pourra, par exemple, prévoir que le signal COM véhiculant la consigne de capacité C1 prédéterminée est toujours prioritaire par rapport au signal CTRL véhiculant la consigne asservie, ou prévoir un signal de commande supplémentaire (non représenté) pour sélectionner une des deux entrées du circuit 39. En variante, on peut modifier le régulateur de phase pour pouvoir lui imposer une valeur de consigne différente permettant que la valeur forcée de la capacité C1 soit délivrée par le signal CTRL.

On notera qu'en forçant la valeur de la capacité, la phase dans le circuit oscillant n'est alors plus régulée. Toutefois, cette correction de l'invention n'intervient que dans des cas bien particuliers où le démodulateur est "aveugle". La valeur de régulation de la capacité est, bien entendu, retrouvée dès que cette situation disparaît, par exemple, dès que la communication avec le transpondeur concerné se termine.

La figure 5 illustre la mise en oeuvre du procédé de l'invention en représentant trois exemples d'amplitude de variations dφ de la phase, disponibles pour le démodulateur de phase en fonction de la capacité C2 du transpondeur présent dans le champ de la borne. En d'autres termes, cela illustre le signal disponible pour exploiter une rétromodulation provenant d'un transpondeur au moyen du démodulateur de phase. La variation dφ représente le signal que doit détecter le démodulateur de phase 37. Il s'agit donc d'une variation "dynamique" (au rythme de la sous porteuse de rétromodulation, par exemple, 847,5 kHz).

Une première courbe 60 tracée en trait plein correspond au cas idéal où la partie imaginaire de l'impédance X1 (formule 3) du circuit oscillant de la borne est nulle. Cela signifie que le circuit oscillant de la borne est parfaitement accordé, y compris dans son fonctionnement dynamique. Ce cas est idéal dans la mesure où le lecteur étant pourvu d'une boucle de phase, statique par rapport aux variations générées par la rétromodulation (par exemple, à 847 kHz), la valeur apparente $X1_{app}$ est statiquement nulle (formule 2).

L'allure 60 croît de façon hyperbolique, symétriquement de part et d'autre d'un minimum 65 à la valeur $C2_{acc}$ de la capacité d'un transpondeur parfaitement accordé sur la porteuse de téléalimentation et qui, en démodulation de phase, correspond à un trou de démodulation.

Par rapport à ce cas idéal, on peut définir deux types de courbes respectivement 61 en traits mixtes et 62 en pointillés correspondant à deux cas réels où la partie imaginaire du circuit oscillant de la borne est respectivement positive ou négative. Dans chacune de ces courbes 61 et 62, on voit apparaître des points, respectivement 63 et 64, dans lesquels la variation de phase dφ est nulle. Ces points correspondent à des trous de démodulation et encadrent le point 65. On notera que les courbes 61 et 62 présentent, chacune, un deuxième minimum, de l'autre côté du point 65 par rapport à leurs premiers minimums respectifs 63 et 64. Ces deuxièmes minima se trouvent cependant hors des plages de tolérance et de dérive des composants des transpondeurs. Par conséquent, on les considère impossible en pratique. Dans l'exemple représenté, on a considéré des positions symétriques des minima 63 et 64 par rapport au minimum 65. Cela montre que les courbes 61 et 62 se croisent pour une valeur de la capacité C2 qui correspond à la valeur d'accord $C2_{acc}$.

Trois trous 63, 64 et 65 de démodulation sont donc susceptibles d'être présents dans la réponse du démodulateur de phase. Selon l'invention, comme il n'est pas souhaitable de passer sur la courbe idéale, la correction à apporter diffère selon le trou de démodulation que l'on cherche à éviter. Par conséquent, quand le test du bloc 41 donne une réponse négative, on doit encore déterminer de quel trou de démodulation il s'agit. Pour ce faire, l'invention propose une nouvelle analyse du comportement des circuits oscillants d'une borne et d'un transpondeur pour déterminer, toujours à partir de valeurs calculées dans une phase d'apprentissage et d'une comparaison par rapport à des valeurs courantes, la correction à effectuer.

On gardera en mémoire que, pour ne pas affecter la téléalimentation du transpondeur, la correction doit, si possible, ne pas introduire de désaccord statique du circuit oscillant de la borne. En effet, on cherche à préserver l'effet bénéfique de la boucle de régulation de phase sur la téléalimentation du transpondeur. Pour maintenir la téléalimentation sans intervenir sur les composants du circuit oscillant du transpondeur, il faut que l'amplitude de la partie imaginaire X1 de l'impédance du circuit oscillant de la borne ne soit pas affectée par la correction. Cela revient à maintenir le module de la partie imaginaire X1.

A partir de l'illustration de la figure 5, on prévoit selon l'invention de passer sur la courbe symétrique par rapport au point 65, c'est-à-dire sur la courbe représentant la partie imaginaire de signe opposé mais de même module. Cet effet est illustré, en figure 5, par une flèche 67 illustrant la sortie du trou 63 de la courbe 61 en se décalant sur la courbe 62.

A partir de la relation 3 indiquée ci-dessus, cela revient à choisir, pour la capacité C1, la valeur de forçage C1$_f$ suivante :

$$C1_f = \frac{1}{\omega \cdot (\omega \cdot L1 + X1)} \cdot \qquad (9)$$

Or la valeur courante de X1 (avant correction) est connue, soit parce que cette valeur est disponible au niveau du circuit de régulation de phase 37, soit à partir de la formule suivante :

$$X1 = \omega \cdot L1 - \frac{VC1}{I} \cdot \qquad (10)$$

Dans l'exemple de la figure 4, on prévoit de calculer (bloc 44) la partie imaginaire X1 à partir de la relation 11 ci-dessus. On notera que toutes les grandeurs nécessaires à ce calcul sont connues ou mesurables (bloc 40, figure 4).

Toutefois, si le minimum 63 est proche du minimum 65, la correction prévue ci-dessus n'est pas suffisante car l'amplitude du signal utile restera insuffisante sur la courbe symétrique. Dans ce cas, l'invention prévoit de forcer une valeur de X1 de signe opposé et suffisamment grande pour s'écarter du trou d'accord "théorique" ou "idéal" 65. Cela revient à passer sur une autre courbe dont non seulement le minimum est séparé du minimum courant par le point 65, mais dont la valeur de l'impédance apparente est également différente. On doit donc accepter ici une diminution de la téléalimentation du transpondeur. On cherche cependant à ce que cette baisse soit minimale.

On peut montrer que le trou de démodulation tend vers la valeur C2$_{acc}$ lorsque la partie imaginaire X1 tend vers la valeur suivante :

$$X1 = k^2 \cdot \omega \cdot L1, \qquad (11)$$

avec k compris entre 0 et k$_{max}$, où k$_{max}$ représente le coefficient de couplage maximal entre les circuits oscillants de la borne et du transpondeur, c'est à dire le coefficient de couplage entre ces deux circuits quand leurs antennes L1 et L2 respectives sont dans une relation de proximité maximale.

Comme $\omega \cdot L1$ est un invariant, seule la valeur de k influe sur celle de X1.

De plus, comme toutes les adaptations prévues par l'invention sont destinées à être effectuées en temps réel et automatiquement, on doit prévoir une valeur C1$_f$ de forçage aisément déterminable par calcul à partir de valeurs mémorisées et mesurées. Afin de disposer d'une valeur suffisante de X1, on peut forcer la valeur de k à k$_{max}$ pour se mettre dans les mêmes conditions que celles d'un transpondeur au couplage maximal où l'on sait qu'on est hors d'un trou de démodulation.

Par conséquent, on prévoit de prédéterminer, dans la phase d'apprentissage, une valeur limite X1$_{lim}$ de la partie imaginaire de l'impédance du circuit oscillant de la borne en deçà de laquelle il ne faut pas descendre (en module). Cette valeur est donnée par la relation suivante :

$$X1_{lim} = k_{max}^2 \cdot \omega \cdot L1. \qquad (12)$$

Le coefficient k$_{max}$ est, de façon approximative mais suffisante, connu pour une famille de transpondeurs donnée à laquelle est destinée la borne considérée. Il est généralement compris entre environ 0,1 et 0,4.

Comme l'illustre la figure 4, après avoir calculé la partie imaginaire courante X1 de l'impédance du circuit oscillant de la borne, on compare (bloc 45) son module au module de la valeur limite X1$_{lim}$.

Si le module courant est supérieur ou égal au module limite, on peut procéder de la façon indiquée ci-dessus et on applique (bloc 46) la valeur de forçage de la relation 10 ci-dessus.

Si le module courant est inférieur au module limite, on cherche à déterminer de quel côté on se trouve par rapport à la valeur à vide. On compare donc les rapports des tension VC1 et courant I mesurés et à vide (bloc 47). Cela revient à déterminer si on est en présence d'une partie imaginaire X1 positive ou négative.

Si le rapport courant est supérieur au rapport à vide, on applique (bloc 48) la valeur de forçage suivante :

$$C1_f = \frac{C1_{vide}}{1 + k_{max}^2} \cdot \qquad (13)$$

Si le rapport courant est inférieur au rapport à vide, on applique (bloc 49) la valeur de forçage suivante :

$$C1_f = \frac{C1_{vide}}{1 - k_{max}^2} \cdot \qquad (14)$$

Une fois la capacité de l'élément 31 forcée, le processus d'initialisation (figure 2) se poursuit (liaison 26) sur la base de cette nouvelle valeur de capacité.

En appliquant l'exemple de valeurs généralement constatées où $k_{max}$ est compris entre 0,1 et 0,4, l'application des relations 13 et 14 conduit à choisir, dans le premier cas, une valeur $C1_f$ comprise entre, environ, 0,8 et 0,9 fois la valeur $C1_{vide}$ et, dans le second cas, une valeur $C1_f$ comprise entre, environ, 1,1 et 1,2 fois la valeur $C1_{vide}$.

On notera que le déphasage dynamique $d\varphi$ peut être mesuré, soit sur le courant I, soit sur la tension VC1 ou analogue. Par conséquent, l'invention s'applique également au cas où d'autres moyens qu'un capteur d'intensité sont utilisés pour détecter le déphasage. Cela dépend du type de démodulateur de phase utilisé.

Un avantage de la présente invention est qu'au moyen d'une détermination de grandeurs électriques aisément mesurables, on améliore considérablement la fiabilité du fonctionnement d'une borne de lecture-écriture de transpondeurs électromagnétiques.

Un autre avantage de l'invention est que l'on intervient que côté borne de lecture-écriture. Par conséquent, le fonctionnement du transpondeur présent dans le champ de la borne n'en est pas affecté et l'invention peut être mise en oeuvre avec des transpondeurs classiques existants.

Un autre avantage de l'invention est qu'en choisissant d'intervenir sur la grandeur de réglage de la boucle statique de régulation de phase, on minimise les modifications structurelles de la borne.

Un autre avantage de la présente invention est qu'elle rend le fonctionnement du système à transpondeur, insensible aux trous de démodulation.

Un autre avantage de la présente invention est que la correction mise en oeuvre ne nuit pas à la téléalimentation du transpondeur.

Un autre avantage de la présente invention est qu'elle ne nécessite aucune adaptation en fonction de la sensibilité du démodulateur. On peut même considérer qu'elle s'adapte automatiquement à une variation du seuil de démodulation. En effet, comme la correction opérée par l'invention est mise en oeuvre à partir du résultat de démodulation, elle est indépendante du seuil de détection du démodulateur.

Bien entendu, la présente invention est susceptible de diverses variantes et modifications qui apparaîtront à l'homme de l'art. En particulier, la mise en oeuvre pratique du procédé de validation de l'invention au moyen des constituants classiques d'une borne de lecture-écriture est à la portée de l'homme du métier à partir des indications fonctionnelles données ci-dessus et de l'application considérée.

De plus, bien que l'on ait fait référence dans la description qui précède à la présence d'un transpondeur avec lequel la borne doit communiquer, l'invention s'applique également au cas où plusieurs transpondeurs doivent communiquer avec une même borne. De façon simplifiée, on peut alors prévoir de forcer la valeur de la capacité C1 dès qu'un des transpondeurs a été identifié comme posant un problème de trou de démodulation. On considère alors que l'atténuation du signal utile qui peut en découler pour les autres transpondeurs est supportable. Toutefois, dans un mode de réalisation préféré, on tient compte du fait que la valeur forcée pour un transpondeur présente un risque, même faible, de placer un autre transpondeur dans un trou de démodulation. On prévoit alors d'individualiser les valeurs des capacités de l'élément 31 de la borne aux différents transpondeurs. Cela est possible quand les communications de plusieurs transpondeurs avec une même borne sont séparées dans des canaux temporels. On peut alors, soit mémoriser les valeurs de capacité C1 lors de la détection des transpondeurs et imposer une de ces valeurs à chaque changement de canal (donc de transpondeur), soit prévoir les étapes de validation (bloc 24, figure 2) à chaque début de transmission d'une séquence de données d'un transpondeur vers la borne. Un avantage de cette dernière solution est qu'elle prend alors en compte les éventuels déplacements d'un transpondeur en cours de communication. On notera qu'il est possible de mettre en oeuvre cette dernière solution dans le cas d'un seul transpondeur pour tirer profit de ce dernier avantage.

En outre, dans la description qui précède, on a considéré que la valeur de la capacité C2 était fixe, c'est-à-dire que la rétromodulation s'effectuait par variation de la résistance équivalente R2. Cependant, l'invention se transpose au cas d'une rétromodulation "capacitive" qui modifie la valeur de la capacité C2 au rythme de la sous porteuse. Dans ce cas, les trous de démodulation sont fonctions de la résistance R2 et varient donc en fonction de la consommation des circuits du transpondeur. Le principe de détection exposé ci-dessus n'est en rien modifié. On adaptera simplement la correction côté borne.

Enfin, si la détermination à partir de la tension aux bornes de l'élément capacitif 31 constitue une solution particulièrement simple à mettre en oeuvre, on pourra tenir compte d'une tension équivalente prélevée en d'autres points, pourvu qu'elle soit liée à la tension aux bornes du circuit oscillant de la borne et soit sensible (dynamiquement) aux variations provoquées par la rétromodulation d'un transpondeur.

**Revendications**

1. Borne (30) de génération d'un champ électromagnétique propre à communiquer avec au moins un transpondeur (10) entrant dans ce champ, comprenant :

   un circuit oscillant propre à être excité par un signal haute fréquence de téléalimentation du transpondeur ;
   un démodulateur de phase (DEMODP) pour détecter d'éventuelles données émises par le transpondeur en modulant, au rythme d'une sous porteuse, la charge qu'il constitue sur le circuit oscillant de la borne,
   des moyens (37) désactivables de régulation de la phase du signal dans le circuit oscillant de la borne sur une valeur de référence avec un temps de réponse grand devant ladite sous porteuse ;
   des moyens de mesure d'une première grandeur liée au courant dans le circuit oscillant;
   des moyens de mesure d'une deuxième grandeur liée à la tension aux bornes du circuit oscillant; et
   des moyens de comparaison de valeurs courantes de ces grandeurs à des valeurs ($I_{vide}$, $VC1_{vide}$) prédéterminées.

2. Borne selon la revendication 1, **caractérisée en ce qu'**elle comporte en outre :

   des moyens de forçage de la valeur d'un élément réglable (31) du circuit oscillant.

3. Borne selon la revendication 2, **caractérisée en ce que** ledit élément réglable est constitué d'un élément capacitif variable (31) du circuit oscillant de la borne.

4. Borne selon la revendication 2 ou 3, **caractérisée en ce que** l'élément réglable (31) est commun aux moyens (37) de régulation de phase et aux moyens (39) de forçage.

5. Procédé de commande d'une borne (30) conforme à l'une quelconque des revendications 1 à 4, **caractérisé en ce qu'**il consiste à exploiter les résultats des moyens de comparaison pour détecter la présence d'un transpondeur (10) dans le champ de la borne.

6. Procédé selon la revendication 5, **caractérisé en ce que** lesdites valeurs prédéterminées correspondent à des valeurs mesurées et mémorisées ($I_{vide}$, $VC1_{vide}$) lors d'un fonctionnement à vide de la borne (30), alors qu'aucun transpondeur (10) n'est présent dans son champ.

7. Procédé selon la revendication 5 ou 6, **caractérisé en ce qu'**il consiste, en l'absence de signal utile d'amplitude suffisante pour permettre au démodulateur (DEMODP) de détecter des données et si un transpondeur (10) a été détecté par la comparaison des valeurs courantes et prédéterminées, à :

   désactiver les moyens de régulation de phase (37) ; et
   forcer la valeur de l'élément réglable (31) du circuit oscillant (R1, L1, 31) sur une valeur ($C1_f$) propre à modifier l'impédance du circuit oscillant de la borne en préservant la téléalimentation du transpondeur.

8. Procédé selon la revendication 7, **caractérisé en ce que** la valeur de forçage ($C1_f$) est choisie pour éviter que lesdites grandeurs (I, VC1) retrouvent lesdites valeurs prédéterminées ($I_{vide}$, $VC1_{vide}$).

9. Procédé selon la revendication 8, **caractérisé en ce qu'**il consiste, pour choisir la valeur de forçage ($C1_f$), à :

   calculer la partie imaginaire courante (X1) de l'impédance (Z1) du circuit oscillant de la borne ; et
   comparer le module courant de cette partie imaginaire à une valeur limite prédéterminée ($X1_{lim}$) pour :

   a) si le module courant est supérieur à la valeur limite, choisir une valeur de forçage ($C1_f$) conférant, à l'impédance du circuit oscillant, une partie imaginaire de même module mais de signe opposé par rapport à la partie imaginaire courante , ou
   b) si le module courant est inférieur ou égal à la valeur limite, choisir une valeur de forçage ($C1_f$) différente selon que la partie imaginaire courante (X1) est positive ou négative.

10. Procédé selon la revendication 9, **caractérisé en ce qu'**il consiste, dans le cas b, à choisir une valeur de forçage ($C1_f$) fonction de la valeur à vide de l'élément de réglage ($C1_{vide}$) avec un coefficient de proportionnalité qui :

   a') si la partie imaginaire courante est négative, est supérieur à l'unité ; et
   b') si la partie imaginaire courante est positive, est inférieur à l'unité.

11. Procédé selon la revendication 9 ou 10, **caractérisé en ce qu'**il consiste à choisir une valeur de forçage $C1_f$ qui :

a') si la partie imaginaire courante est négative, respecte la relation suivante :

$$C1_f = \frac{C1_{vide}}{1 - k_{max}^2} \; ;$$

et

b') si la partie imaginaire courante est positive, respecte la relation suivante :

$$C1_f = \frac{C1_{vide}}{1 + k_{max}^2} \; ,$$

où $C1_{vide}$ représente la capacité à vide de l'élément de réglage (31) et où $k_{max}$ représente le coefficient de couplage maximal entre le transpondeur et la borne.

**Claims**

1. A terminal (30) for generating an electromagnetic field adapted to communicating with at least one transponder (10) entering this field, including:

    an oscillating circuit adapted to being excited by a high-frequency remote supply signal of the transponder;
    a phase demodulator (DEMODP) for detecting possible data transmitted by the transponder by modulating, at the rate of a sub-carrier, the load that it forms on the terminal's oscillating circuit;
    desactivable means (37) for regulating the signal phase in the terminal's oscillating circuit on a reference value with a long response time as compared to said sub-carrier;
    means for measuring a first variable linked with the current in the oscillating circuit;
    means for measuring a second variable linked to the voltage across the oscillating circuit; and
    means for comparing current values of these variables with predetermined values ($I_{off-load}$, $VC1_{off-load}$).

2. The terminal of claim 1, further including means for forcing the value of a settable element (31) of the oscillating circuit.

3. The terminal of claim 2, wherein said settable element is formed of a variable capacitive element (31) of the terminal's oscillating circuit.

4. The terminal of claim 2 or 3, wherein the settable element (31) is common to the phase regulation means (37) and to the forcing means (39).

5. A method for controlling the terminal (30) of any of claims 1 to 4, consisting of exploiting the results of the comparison means to detect the presence of a transponder (10) in the terminal's field.

6. The method of claim 5, wherein said predetermined values correspond to values ($I_{off-load}$, $VC1_{off-load}$) measured and stored during an off-load operation of the terminal (30), while no transponder (10) is present in its field.

7. The method of claim 5 or 6, consisting, in the absence of a useful signal of sufficient amplitude to enable detection of data by the demodulator (DEMODP) and if a transponder (10) has been detected by the comparison of the current and predetermined values, of:

    deactivating the phase regulation means (37); and
    forcing the value of the settable element (31) of the oscillating circuit (R1, L1, 31) to a value ($C1_f$) adapted to modifying the impedance of the terminal's oscillating circuit while keeping the transponder's remote supply.

8. The method of claim 7, wherein the forcing value ($C1_f$) is selected to avoid for said variables (I, VC1) to recover said predetermined values ($I_{off-load}$, $UC1_{off-load}$).

9. The method of claim 8, consisting, to select the forcing value ($C1_f$), of:

    calculating the current imaginary part (X1) of the impedance (Z1) of the terminal's oscillating circuit; and
    comparing the current module of this imaginary part with a predetermined limiting value ($X1_{lim}$) for:

        a) if the current module is greater than the limiting value, choosing a forcing value ($C1_f$) giving to the impedance of the oscillating circuit an imaginary part of same module but of opposite sign with respect to the current imaginary part, or
        b) if the current module is smaller than or equal to the limiting value, choosing a different forcing value ($C1_f$) according to whether the current imaginary part (X1) is positive or negative.

10. The method of claim 9, consisting, in case b, of selecting a forcing value ($C1_f$) depending on the off-load value of the setting element ($C1_{off-load}$) with a proportionality coefficient which:

a') if the current imaginary part is negative, is greater than one; and
b') if the current imaginary part is positive, is smaller than one.

11. The method of claim 9 or 10, consisting of selecting a forcing value $C1_f$ which:

a') if the current imaginary part is negative, respects the following relation:

$$C1_f = \frac{C1_{\text{off-load}}}{1 - k_{max}^2} \;;$$

and

b') if the current imaginary part is positive, respects the following relation:

$$C1_f = \frac{C1_{\text{off-load}}}{1 + k_{max}^2} \;,$$

where $C1_{\text{off-load}}$ represents the off-load capacitance of the setting element (31) and where $k_{max}$ represents the maximum coupling coefficient between the transponder and the terminal.

**Patentansprüche**

1. Eine Anschlussvorrichtung (30) zur Erzeugung eines elektromagnetischen Feldes, geeignet zur Verbindung mit mindestens einem Transponder (10), der in dieses Feld eintritt, wobei Folgendes vorgesehen ist:

eine Oszillationsschaltung, geeignet zur Erregung durch ein hochfrequentes Fernversorgungssignal des Transponders;
ein Phasendemodulator (DEMODP) zum Detektieren möglicher Daten, übertragen durch den Transponder durch Modulation, mit der Rate eines Subträgers, der Last gebildet an der Oszillationsschaltung der Anschlussvorrichtung;
entaktivierbare Mittel (37) zum Regulieren der Signalphase in der Oszillationsschaltung der Anschlussvorrichtung auf einen Bezugswert mit einer langen Ansprechzeit, verglichen mit dem erwähnten Subträger;
Mittel zur Messung einer ersten Variablen, in Verbindung stehend mit dem Strom in der Oszillationsschaltung;
Mittel zum Messen einer zweiten Variablen, in Verbindung stehend mit der Spannung an der Oszillationsschaltung; und

Mittel zum Vergleichen der Stromwerte dieser Variablen mit vorbestimmten Werten ($I_{\text{Off-Load}}$, $VC1_{\text{Off-Load}}$).

2. Die Anschlussvorrichtung nach Anspruch 1, mit Mitteln zur Erzwingung des Wertes eines einstellbaren Elements (31) der Oszillationsschaltung.

3. Die Anschlussvorrichtung nach Anspruch 2, wobei das einstellbare Element durch ein variables kapazitives Element (31) der Oszillationsschaltung der Anschlussvorrichtung gebildet ist.

4. Die Anschlussvorrichtung nach Anspruch 2 oder 3, wobei das einstellbare Element (31) den Phasenreguliermitteln (37) und den Erzwingungsmitteln (39) gemeinsam ist.

5. Ein Verfahren zur Steuerung einer Anschlussvorrichtung (30) nach einem der Ansprüche 1 bis 4, darin bestehend, dass die Ergebnisse der Vergleichsmittel ausgenutzt werden, um das Vorhandensein eines Transponders (10) im Feld der Anschlussvorrichtung zu detektieren.

6. Das Verfahren nach Anspruch 5, wobei die vorbestimmten Werte den Werten ($I_{\text{Off-Load}}$, $VC1_{\text{Off-Load}}$) gemessen und gespeichert während eines Off-Load-Betriebs der Anschlussvorrichtung (30) entsprechen, während kein Transponder (10) im Feld vorhanden ist.

7. Das Verfahren nach den Ansprüchen 5 oder 6, welches bei Nichtvorhandensein eines brauchbaren Signals von hinreichender Amplitude zur Ermöglichung der Detektion von Daten durch den Demodulator (DEMODP) und dann, wenn ein Transponder (10) durch den Vergleich der laufenden und vorbestimmten Werte detektiert wurde, Folgendes vorsieht:

Deaktivieren der Phasenregulationsmittel (37); und
Erzwingen des Wertes des einstellbaren Elements (31) der Oszillations schaltung (R1, L1, 31) auf einen Wert ($C1_f$), geeignet zur Modifizierung der Impedanz der Oszittationsschaltung der Anschlussvorrichtung, wobei die Fernversorgung des Transponders beibehalten wird.

8. Das Verfahren nach Anspruch 7, wobei der Erzwingungswert ($C1_f$) ausgewählt ist, um zu vermeiden, dass die erwähnten Variablen (I, VC1) die erwähnten vorbestimmten Werte ($I_{\text{Off-Load}}$, $VC1_{\text{Off-Load}}$) wiedergewinnen.

9. Das Verfahren nach Anspruch 8, bestehend zur Auswahl des Erzwingungswertes (C1$_f$) aus Folgendem:

Berechnung des laufenden Imaginärteils (X1) der Impedanz (Z1) der Oszillationsschaltung der Anschlussvorrichtung; und
Vergleichen des laufenden Moduls dieses Imaginärteils mit einem vorbestimmten Grenzwert (X1$_{lim}$) für:

a) Wählen eines Erzwingungswertes (C1$_f$), wenn das laufende Modul größer ist als der Grenzwert, wobei der impedanz der Oszillationsschaltung ein Imaginärteil des gleichen Moduls auch von entgegengesetzten Vorzeichen bezüglich des laufenden Imaginärteils gegeben wird, oder für das
b) Wählen eines unterschiedlichen Erzwingungswertes (C1$_f$) wenn das laufende Modul kleiner ist als oder gleich ist dem Grenzwert, abhängig davon ob der laufende Imaginärteil (X1) positiv oder negativ ist.

**10.** Das Verfahren nach Anspruch 9, wobei im Falle b) ein Erzwingungswert (C1$_f$) ausgewählt wird, abhängig von dem Off-Loadwert des Einstellelements (C1$_{Off-Load}$) mit einem Proportionalitätskoeffizienten der:

a') größer als eins ist, wenn der laufende Imaginärteil negativ ist; und
b') kleiner als eins ist, wenn der laufende Imaginärteil positiv ist.

**11.** Das Verfahren nach Anspruch 9 oder 10, bestehend aus der Auswahl eines Erzwingungswertes (C1$_f$) der

a') dann wenn der laufende Imaginärteil negativ ist, die folgende Gleichung erfüllt:

$$C1_f = \frac{C1_{\text{off-load}}}{1 - k_{max}^2} \; ;$$

und
b') dann wenn der laufende Imaginärteil positiv ist, die folgende Gleichung erfüllt:

$$C1_f = \frac{C1_{\text{off-load}}}{1 + k_{max}^2} \; ,$$

wobei C1$_{Off-Load}$ die Off-Load- oder Lastauskapazität des Einstellelements (31) repräsentiert und wobei k$_{max}$ den maximalen Kopplungskoeffizienten zwischen dem Transponder und der Anschlussvorrichtung repräsentiert.

Fig 1

Fig 2

Fig 3

Fig 5

MESURE
I et VC1 — 40

41

$\dfrac{VC1}{I} = \dfrac{VC1\ vide}{I\ vide}$ ?   O

N

$X1 = \omega L1 - VC1/I$ — 44

45

N   $|X1| < |X1lim|$ ?   O

47

O   $\dfrac{VC1}{I} > \dfrac{VC1\ vide}{I\ vide}$ ?   N

48

$C1f = \dfrac{1}{\omega\,(\omega L1 + X1)}$ — 46

$C1f = \dfrac{C1\ vide}{1 + k^2_{max}}$

49

$C1f = \dfrac{C1\ vide}{1 - k^2_{max}}$

25

26

Fig 4